# EUROPEAN PATENT SPECIFICATION

(11) **EP 2 492 860 B1**
(45) Date of publication and mention of the grant of the patent: **14.06.2017**
(21) Application number: 12001182.0
(22) Date of filing: 22.02.2012
(51) Int. Cl.: G06Q 10/10, H04L 29/06

(54) **Forwarding data from server to device**
Weiterleitung von Daten von einem Server an eine Vorrichtung
Transfert de données d'un serveur vers un dispositif

(30) Priority: 23.02.2011 US 201113032644
(43) Date of publication of application: 29.08.2012
(73) Proprietor: SAP SE, 69190 Walldorf (DE)
(72) Inventor: Lamba, Vikas, 69190 Walldorf (DE)
(74) Representative: Müller-Boré & Partner Patentanwälte PartG mbB

(56) References cited:
- EP-A1- 1 775 911
- US-A1- 2005 073 991
- US-A1- 2006 009 213
- US-A1- 2007 299 918
- US-A1- 2008 008 148
- US-A1- 2009 024 991

## Description

### FIELD

The field generally relates to computer systems, and more particularly to methods and systems for transferring data from a server to a device.

### BACKGROUND

Enterprise content management generally relates to managing content involving digital data of an enterprise or a business venture. Providing timely and accurate device access to enterprise applications and processes is a vital requirement for end users. Synchronizing the device with the enterprise content is essential to bring the device in line with the latest state of technology and content provided by the enterprise. Currently, a pull based technology is utilized to synchronize the device data with the enterprise content, wherein the device triggers a data download from the enterprise. This type of synchronization may not always yield data download for every synchronizing action because the device is not aware when or whether any new data is available for download on the enterprise. Moreover, this type of synchronization does not provide timely data to the device, which may be critical for business applications that run on the device. Thus, techniques for more effective synchronization of devices with the enterprise are desirable.

US 2009/0024991 (Campbell et al.) discloses a method for managing downloads of files from a server. The method includes presetting, using a tool, a threshold number of allowable connections for each client requesting connections to download files from a server. The method further includes identifying, using the tool, a client requesting one or more connections to download a file and tracking, using the tool, whether or not the client has exceeded the threshold number of allowable connections preset.

US 2005/0073991 (Roberts et al.) discloses a device for facilitating the simultaneous synchronization of wireless devices. A host computer system running synchronization software is connected to multiple wireless device connection nodes. The computer system manages synchronization with multiple wireless devices simultaneously.

### BRIEF DESCRIPTION OF THE DRAWINGS

The claims set forth the embodiments of the invention with particularity. The invention is illustrated by way of example and not by way of limitation in the figures of the accompanying drawings in which like references indicate similar elements. The embodiments of the invention, together with its advantages, may be best understood from the following detailed description taken in conjunction with the accompanying drawings.
FIG. 1 is a block diagram illustrating an overview of a system for forwarding data from a continuation server to handheld devices, according to an embodiment.
FIG. 2 is a block diagram illustrating an overview of a system for forwarding data from a continuation server to handheld devices, according to another embodiment.
FIG. 3 is a block diagram illustrating a stack container utilized for forwarding data from a continuation server to handheld devices, according to an embodiment.
FIG. 4 is a process flow diagram illustrating a method for forwarding data from a continuation server to handheld devices, according to an embodiment.
FIG. 5A is a functional flow diagram illustrating a method for forwarding data from a continuation server to handheld devices, according to an embodiment.
FIG. 5B is a functional flow diagram illustrating a method for forwarding data from a continuation server to handheld devices, according to an embodiment.
FIG. 6 is a sequence diagram illustrating a data flow for forwarding data from a continuation server to handheld devices, according to an embodiment.
FIG. 7 is a sequence diagram illustrating a data flow for forwarding data from a continuation server to handheld devices, according to an embodiment.
FIG. 8 is a block diagram illustrating a computer system for forwarding data from a continuation server to handheld devices, according to an embodiment.
FIG. 9 is a block diagram illustrating an exemplary computer system, according to an embodiment.

### DETAILED DESCRIPTION

Benefits and features of embodiments of the invention will be apparent upon consideration of the following detailed description of preferred embodiments thereof, presented in connection with the following drawings.

Embodiments of techniques for systems and methods for forwarding data from a continuation server to handheld devices are disclosed. A continuation server may be described as a computing device responsible for executing computer applications across distributed networks. The continuation server may be installed on a network-interface zone (also referred to as a demilitarized zone or DMZ) that acts as an interface between devices existing in a public network and devices existing in a private network. The continuation server may have a static address and/or an address that does not change often, e.g. a static Internet Protocol address or a dynamic Internet Protocol address that changes infrequently (e.g. less than once per month or less than once every 6 months). A handheld device (also referred to as a mobile device) may be described as a portable computing device included in a public network. Some of the handheld devices may include a mobile phone, a personal digital assistant (PDA), a laptop, and the like. It may be difficult to distribute data to handheld devices because their addresses (e.g. Internet Protocol addresses) may change often. For example, the handheld devices may connect to the Internet using Dynamic Host Configuration Protocol (DHCP), possibly via multiple different DHCP servers, which may cause the handheld devices to be allocated different addresses upon each connection such that their addresses often change. This may make it difficult for the continuation server or a web server to initiate a connection to the handheld devices, e.g. in order to push data to the handheld devices.

The handheld device in the public network may establish a connection with the continuation server in the network-interface zone to exchange data. Based upon a connection that is established between the continuation server and the handheld device, data synchronization may be invoked to intimate (i.e. notify or inform) the handheld device about an availability of data, thus triggering a synchronization of handheld device only when there is an availability of data to be downloaded.

In the following description, numerous specific details are set forth to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Reference throughout this specification to "one embodiment", "this embodiment" and similar phrases, means that a particular feature, structure, or characteristic described in connection with the embodiment is included in at least one embodiment of the present invention. Thus, the appearances of these phrases in various places throughout this specification are not necessarily all referring to the same embodiment. Furthermore, the particular features, structures, or characteristics may be combined in any suitable manner in one or more embodiments.

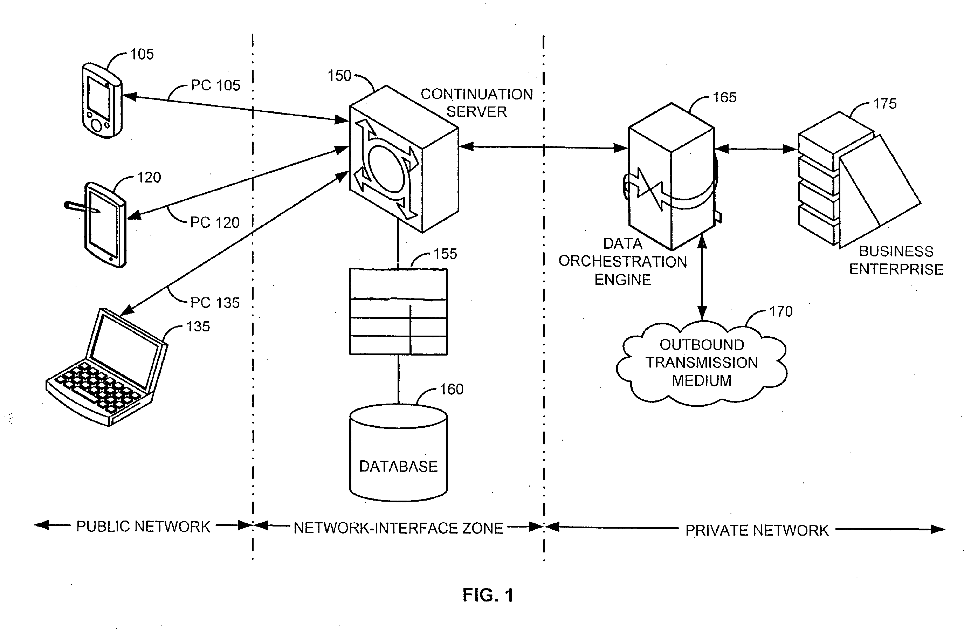

FIG. 1 is a block diagram illustrating an overview of a system for forwarding data from a continuation server to handheld devices, according to an embodiment. A continuation server may be described as a computing device installed on a network that manages data on the corresponding network. In an embodiment, a continuation server may be described as a computing device installed on a network-interface zone, which acts as an interface between devices existing in a public network and devices existing in a private network. In an embodiment, network-interface zone is independent of the public network and the private network. A handheld device may be described as a portable computing device included in a public network.

A protocol connection may include a mechanism for establishing a connection for communication between multiple computing devices, for instance, between a handheld device and a continuation server. Establishing a protocol connection may include establishing communication between the computing devices. Once the protocol connection is established, information may be exchanged between the computing devices, the established communication may be authenticated, errors that may arise during communication may be detected and corrected, etc. The protocol connection is generally established to synchronize the multiple computing devices. Computing devices use protocol connections for exchanging information having an intended meaning, which will invoke an intended response.

A protocol connection may have a number of characteristics. In particular, the protocol connection may time out after a predefined period. Also, establishing the protocol connection may require determining a destination address (e.g. an Internet Protocol address of the destination computer). The protocol connection may use Internet Protocol (IP), and possibly Transmission Control Protocol (TCP). Computational resources may be required to maintain an open protocol connection. In particular, a server maintaining a protocol connection may need a running process or thread to hold status information associated with the protocol connection. Initiating a protocol connection may require a source computer (e.g. the continuation server) to know (e.g. store in memory) an IP address of a destination computer (e.g. a handheld device). A specific example of a protocol connection is a hypertext transfer protocol (HTTP) connection. One skilled in the relevant art will recognize different types of protocol connections to communicate between the computing devices.

In an embodiment, a handheld device includes a polling agent and a data synchronization module. The polling agent is operable to send a protocol connection request from the handheld device to continuation server. The polling agent may run as a background service on the handheld device. Also, the protocol agent may establish a protocol connection with continuation server. If, at any instance, the protocol connection between the handheld device and continuation server is lost, the polling agent is invoked to re-establish the protocol connection. Thus, the polling agent is operable to establish the protocol connection between the handheld device and the continuation server, and to ensure that the protocol connection is not lost.

A data synchronization module is responsible for synchronizing an associated handheld device with business enterprise (also referred to as business enterprise server or business enterprise system). The data synchronization module may also run as a background service on the handheld device. Business enterprise includes information, applications and processes that are extended to the associated handheld devices. Business enterprise may exist on a private network, and is extended to provide the required information to the handheld devices existing in the public network. The data synchronization module is triggered when there is data available to be downloaded to the handheld device, and the data synchronization module downloads the available data from business enterprise to the handheld device.

With reference to FIG. 1, handheld devices include a mobile phone 105, a personal digital assistant (PDA) 120, and a laptop computer 135. One skilled in the relevant art will recognize many such handheld devices that may receive a forwarded data from continuation server 150. Each of the handheld devices 105, 120 and 135 establish a corresponding protocol connection (PC 105, PC 120 and PC 135) with continuation server 150. Establishing a protocol connection may include initializing a polling agent present in each handheld device to send a protocol connection request to continuation server 150.

In an embodiment, continuation server 150 accepts the received protocol connection request from the handheld devices to establish the protocol connection. For the received protocol connection, continuation server 150 creates stack container 155 to store a status of each protocol connection. The status of the protocol connection indicates an availability of the protocol connection (PC 105, PC 120 and PC 135) between the handheld devices (105, 120 and 135) and continuation server 150. Stack container 155 may be described as a data container that stores data in an assigned manner for further usage. In an embodiment, stack container 155 is stored in database 160. Stack container 155 stores the statuses of all the protocol connections (PC 105, PC 120 and PC 135) between the corresponding handheld devices (105, 120 and 135) and continuation server 150 until continuation server 150 receives a data notification or until the protocol connection is suspended. The protocol connection may be suspended, e.g. when the connection times out (e.g. the connection is closed after a predefined period of inactivity). Thus, suspending the protocol connection may involve closing or terminating the protocol connection, possibly by the continuation server 150.

A data notification may include an availability of data to be downloaded on to the handheld devices (105, 120 and 135). Based upon the protocol connections (PC 105, PC 120 and PC 135) established between the handheld devices (105, 120 and 135) and continuation server 150, data synchronization may be invoked to intimate (i.e. inform or notify) the handheld devices (105, 120 and 135) about the availability of data. Thus the data synchronization of the handheld devices (105, 120 and 135) is triggered, e.g. by the polling agent, only when there is an availability of data to be downloaded. Also, since stack container 155 stores the statuses of all the protocol connections (PC 105, PC 120 and PC 135), a determination can be made of the available protocol connections to trigger the data synchronization for the handheld devices that have an available protocol connection.

Continuation server 150 monitors the protocol connections (PC 105, PC 120 and PC 135) continually and updates the status of the protocol connections (PC 105, PC 120 and PC 135) in stack container 155. Stack container 155 includes a list of device identifiers (device ID) and a status of the protocol connections that are established between the handheld devices (105, 120 and 135) and continuation server 150.

In particular, each protocol connection may be opened and held using a process or thread on the continuation server 150. The term process will be used in the following example, however, it should be understood that threads may also be used. Accordingly, there is a limit to the number of processes that can be maintained on continuation server 150. In particular, it is possible that the limit may be smaller than the number of handheld devices for which open protocol connections must be maintained on the continuation server 150. To maintain status information for the protocol connections without maintaining open processes, stack container 155 may include, for each protocol connection, a status of the process used to hold the protocol connection at a given point in the process's execution. Thus, for the protocol connection, the stack container 155 may include information such as the process's current stack (i.e. the stack segment or local data of the process such as local variables), as well as a reference to the current state or progress of execution of the process (i.e. the next instruction to be executed when the process is loaded into memory). In other words, for each protocol connection, the stack container 155 includes data necessary to resume execution of the process. Saving this data into the stack container 155 allows the process holding the protocol connection to be terminated (freeing resources for other processes or computational processing), and restarted by reading the saved data from the stack container (e.g. when a notification of data to be synchronized is received at the continuation server 150).

In an embodiment, stack container 155 maintains the connectivity between continuation server 150 and the handheld devices (105, 120 and 135). Maintaining the connectivity may include continually monitoring the protocol connections of the handheld devices. Maintaining the connectivity may also include re-establishing the suspended protocol connections between the continuation server 150 and the handheld devices (105, 120 and 135). Alternatively, maintaining the connectivity may include suspending protocol connections between continuation server 150 and the handheld devices (105, 120 and 135), and establishing new protocol connections between the continuation server 150 and the handheld devices (105, 120 and 135). Stack container 155 is updated with the statuses of the protocol connections (PC 105, PC 120 and PC 135).

In response to the data notification received, continuation server 150 sends a data alert to the polling agent of the handheld device based upon the availability of the protocol connection between the handheld device and continuation server 150. The availability of the protocol connection is determined by invoking stack container 155 to retrieve the status of each protocol connection. In response to the data alert, the polling agent of the handheld device may close the protocol connection; further, the polling agent may invoke the data synchronization module associated with the handheld device for downloading the data to the handheld device.

In an embodiment, if the protocol connection between continuation server 150 and a handheld device is suspended, continuation server 150 notifies the polling agent associated with the corresponding handheld device about the suspended protocol connection. Continuation server 150 may send a suspension alert to the polling agent of the handheld device with the suspended protocol connection. Based upon the suspension alert received, the polling agent is instructed to send a protocol connection request from the corresponding handheld device to the continuation server to re-establish the suspended protocol connection.

In an embodiment, data orchestration engine 165 is in communication with business enterprise 175, and is installed in the private network. Data orchestration engine 165 may be defined as a computing device that allows the exchange of data between business enterprise 175 and handheld devices (105, 120 and 135). Data orchestration engine 165 identifies data, data notifications or any modification of data available for the handheld devices (105, 120 and 135) on business enterprise 175, and sends the data or data notifications from business enterprise 175 to continuation server 150. Continuation server 150 further forwards the data notification and the available data to the corresponding handheld devices (105, 120 and 135). The data orchestration engine 165 may include a web server.

In an embodiment, outbound transmission medium 170 may be associated with data orchestration engine 165. Outbound transmission medium 170 accepts a registration of each handheld device to receive data or data notifications from business enterprise 175. Outbound transmission medium 170 sends such data notifications along with the corresponding data alert to the handheld devices (105, 120 and 135) that are registered with outbound transmission medium 170.

An example of a method for forwarding data from a continuation server to the handheld devices is disclosed herein. MOBILE DEVICE 105, PDA 120 and LAPTOP 135 exist in a public network. Business enterprise 175 includes information relating to a MOBILE DEVICE 105, a PDA 120 and a LAPTOP 135. MOBILE DEVICE 105, PDA 120 and LAPTOP 135 are registered with outbound transmission medium 170 to receive any data notifications available on business enterprise 175. The associated polling agents of MOBILE DEVICE 105, PDA 120 and LAPTOP 135 each send a protocol connection request to continuation server 150 to establish the respective protocol connection (PC 105, PC 120 and PC 135). Continuation server 150 creates stack container 155 to store the status of the availability of the protocol connections (PC 105, PC 120 and PC 135). Continuation server 150 continually monitors the protocol connections (PC 105, PC 120 and PC 135) and updates the status of the protocol connections in stack container 155. In an embodiment, continuation server 150 stores stack container 155 in database 160.

To include certain advanced features on MOBILE DEVICE 105, PDA 120 and LAPTOP 135, a new SOFTWARE UPDATE is available in business enterprise 175. Data orchestration engine 165 identifies the SOFTWARE UPDATE available for MOBILE DEVICE 105, PDA 120 and LAPTOP 135, and sends a data notification and the available data to continuation server 150. Based upon the data notification received by continuation server 150, continuation server 150 invokes or accesses stack container 155 to retrieve the status of each protocol connection (PC 105, PC 120 and PC 135). At this instance, the statuses of the protocol connections (PC 105, PC 120 and PC 135) are CONNECTED. Continuation server 150 sends a data alert to the polling agent of MOBILE DEVICE 105, PDA 120 and LAPTOP 135 to notify the devices of the availability of the SOFTWARE UPDATE.

In response to the data alert, the polling agent of MOBILE DEVICE 105, PDA 120 and LAPTOP 135 invoke their associated data synchronization modules for downloading the SOFTWARE UPDATE to MOBILE DEVICE 105, PDA 120 and LAPTOP 135. The SOFTWARE UPDATE is forwarded from continuation server 150 to MOBILE DEVICE 105, PDA 120 and LAPTOP 135.

If protocol connection PC 135 is suspended, stack container 155 is updated by continuation server 150. Continuation server 150 sends a suspension alert to the polling agent of LAPTOP 135 with the suspended protocol connection PC 135. Based upon the suspension alert, the polling agent of LAPTOP 135 is instructed to send a protocol connection request from LAPTOP 135 to continuation server 150, to re-establish the corresponding suspended protocol connection PC 135.

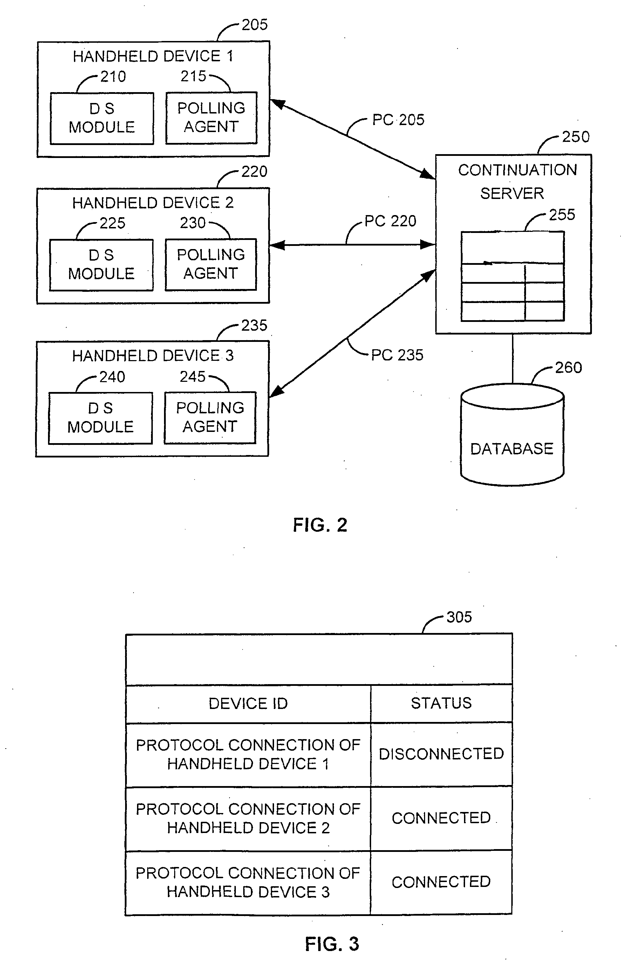

FIG. 2 is a block diagram illustrating an overview of a system for forwarding data from a continuation server to handheld devices, according to another embodiment. The handheld devices (for e.g., 205, 220 and 235) include associated data synchronization (DS) modules (for e.g., 210, 225 and 240) and polling agents (for e.g., 215, 230 and 245). Continuation server 250 receives protocol connections (for e.g., PC 205, PC 220 and PC 235) from corresponding handheld devices (205, 220 and 235). For the received protocol connections (PC 205, PC 220 and PC 235), continuation server 250 creates stack container 255 to store a status of each protocol connection. The status indicates an availability of the protocol connections between the corresponding handheld devices and continuation server 250. The polling agents (215, 230 and 245) send a protocol connection request from the corresponding handheld device (205, 220 and 235) to continuation server 250 to establish the protocol connection (PC 205, PC 220 and PC 235) for the handheld devices (205, 220 and 235). Stack container 255 holds the protocol connection (PC 205, PC 220 and PC 235) along with the corresponding statuses until a data notification is received by continuation server 250 or until the protocol connection (PC 205, PC 220 and PC 235) between continuation server 250 and the corresponding handheld device (205, 220 and 235) is suspended.

Based upon a data notification received, stack container 255 is invoked (i.e. accessed) to retrieve the statuses of each protocol connection (PC 205, PC 220 and PC 235). The data notification may include an availability of data to be downloaded to the handheld device (205, 220 and 235). Continuation server 250 sends a data alert to the polling agent (215, 230 and 245) of each handheld device (205, 220 and 235) based upon the availability of the corresponding protocol connection (PC 205, PC 220 and PC 235), for notifying the availability of data. In response to the data alert, the polling agent (215, 230 and 245) of each handheld device (205, 220 and 235) invokes a data synchronization module (210, 225 and 240) for downloading the data to the corresponding handheld device (205, 220 and 235). The data may be downloaded directly from the data orchestration engine 165. Based upon the statuses of the protocol connections (PC 205, PC 220 and PC 235), the data notification and the available data are forwarded from continuation server 250 to the corresponding handheld devices (205, 220 and 235).

An advantage of the continuation server 150 may be that it performs tasks that would otherwise need to be carried out by the data orchestration engine 165, thereby saving resources on the data orchestration engine 165 and improving the performance of the data orchestration engine 165. In particular, maintaining a large number of protocol connections to the handheld devices (105, 120, 135) may overload the data orchestration engine 165 and hinder the data orchestration engine 165 from performing other tasks (e.g. as a web server). Also, it may be desirable to maintain the continuation server 150 in the network interface zone as a buffer between devices in the public network and the systems in the private network, e.g. in the interest of improved security. Use of the stack container 155 may reduce the resources required to keep track of the protocol connections to the handheld devices (105, 120, 135) since processes need only be active in the case of protocol connections that are currently needed by the continuation server 150 in order to communicate with the handheld devices (105, 120, 135).

In an embodiment, stack container 255 holds the protocol connection (PC 205, PC 220 and PC 235) along with the corresponding statuses until the protocol connections (PC 205, PC 220 and PC 235) between the corresponding handheld devices (205, 220 and 235) and continuation server 250 are suspended. Stack container 255 maintains the connectivity between continuation server 250 and handheld devices (205, 220 and 235). If a protocol connection (PC 205, PC 220 and PC 235) is suspended, continuation server 250 sends a suspension alert to the polling agent (215, 230 and 245) of the handheld device (205, 220 and 235) with a suspended protocol connection (PC 205, PC 220 and PC 235). Based upon the suspension alert, the polling agent (215, 230 and 245) is instructed to send a protocol request from the corresponding handheld device (205, 220 and 235) to continuation server 250 to re-establish the corresponding suspended protocol connection (PC 205, PC 220 and PC 235).

FIG. 3 is a block diagram illustrating a stack container 305 utilized while forwarding data from a continuation server to handheld devices, according to an embodiment. The continuation server receives protocol connections from the corresponding handheld devices. For the received protocol connections, stack container 305 is created on the continuation server to store a status of each of the protocol connections. A stack container may be described as data container that stores data in an assigned manner such that the data stored can be used efficiently. In an embodiment, stack container 305 stores the data that indicates a status of each protocol connection between a corresponding handheld device and the continuation server. The statuses of the protocol connections indicate the availability of the protocol connections between the continuation server and the handheld devices. The statuses of the protocol connections may include a 'CONNECTED' status and a 'DISCONNECTED' status to represent the protocol connections that are connected and the protocol connections that are disconnected.

A protocol connection that is connected indicates that a connection (for e.g., protocol connection) is established between the handheld device and the continuation server. A protocol connection that is disconnected indicates that the connection between the handheld device and the continuation server is suspended, or disconnected, or has not been established, or the like. The continuation server monitors the protocol connections continually and updates the status of the protocol connections in stack container 305. In an embodiment, stack container 305 maintains the connectivity between the continuation server and the handheld devices. Maintaining the connectivity includes continually monitoring the protocol connections of the handheld devices and re-establishing the suspended protocol connections between the continuation server and the handheld device. The stack container 305 is updated with the statuses of the protocol connections.

As illustrated in FIG. 3, stack container 305 includes a list of device identifiers (device ID) and a status of the protocol connections of the handheld devices that have established a protocol connection with the continuation server. The device ID indicates a protocol connection of a corresponding handheld device and the status indicates the status of the protocol connection between the continuation server and the corresponding handheld device. For instance, stack container 305 includes the device ID 'PROTOCOL CONNECTION OF HANDHELD DEVICE 1' and the corresponding status 'DISCONNECTED' as a first entry. The status of the 'PROTOCOL CONNECTION OF HANDHELD DEVICE 1' may be a current status of the connection as updated by the continuation server which continually monitors the protocol connections.

In an embodiment, all the handheld devices need not establish corresponding protocol connection with the continuation server at a same time. There may be some handheld devices that have not yet established corresponding protocol connections with the continuation server. There may be some handheld devices that have established corresponding protocol connections at different intervals of time. The continuation server updates stack container 305 whenever a protocol connection is established between the continuation server and the corresponding handheld device.

For instance, HANDHELD DEVICE 1 establishes a protocol connection with the continuation server at 11:00 hours. HANDHELD DEVICE 2 establishes a protocol connection with the continuation server at 13:30 hours. HANDHELD DEVICE 3 establishes a protocol connection with the continuation server at 14:00 hours. Since the continuation server continually monitors the protocol connections existing between the continuation server and the handheld devices, the continuation server updates the status of HANDHELD DEVICE 1 as connected at 11:00 hours, the status of HANDHELD DEVICE 2 at 13:30 hours, and the status of HANDHELD DEVICE 3 at 14:00 hours. Meanwhile, if the protocol connection of HANDHELD DEVICE 1 is suspended at 14:00 hours, the continuation server updates the status of the HANDHELD DEVICE 1 as DISCONNECTED. At 14:00 hours, stack container 305 appears as shown in FIG. 3. Thus, stack container 305 holds the protocol connections of all the handheld devices along with the corresponding statuses until the protocol connection is suspended or until a data notification is received by the continuation server.

According to an embodiment, stack container 305 is invoked (i.e. accessed or queried) at two instances while forwarding data from the continuation server to the handheld devices, once when the continuation server monitors the protocol connection and updates the corresponding status in stack container 305, and once again when the status of the protocol connection is retrieved based upon a data notification received by the continuation server. In an embodiment, for a first protocol connection that is established between a handheld device and the continuation server, stack container 305 is created on the continuation server to store the status of the protocol connection that is established between the handheld device and the continuation server.

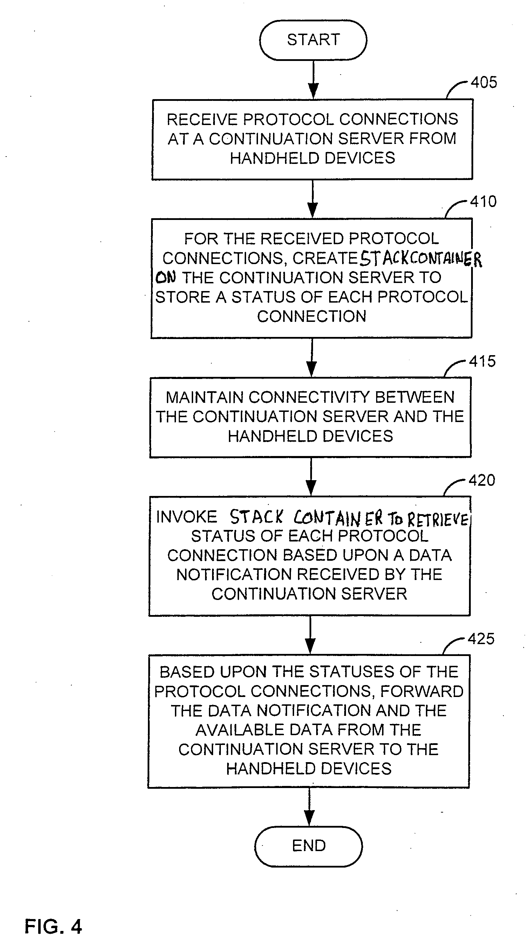

FIG. 4 is a process flow diagram illustrating a method for forwarding data from a continuation server to handheld devices, according to an embodiment. In process block 405, protocol connections from corresponding handheld devices are received at the continuation server. A polling agent present in each handheld device may be initialized to send a protocol connection request from the corresponding handheld device to the continuation server, to establish the protocol connection between the corresponding handheld device and the continuation server. In process block 410, for the received protocol connections, a stack container is created on the continuation server to store a status of each protocol connection. The status of the protocol connection indicates an availability of the protocol connection between the corresponding handheld device and the continuation server. The stack container holds the protocol connection and the corresponding status of each handheld device until the protocol connection is suspended or until a data notification is received by the continuation server. For instance, a protocol connection of a handheld device connected to the continuation server may have a 'CONNECTED' status stored in the stack container, and if a protocol connection of a handheld device with the continuation server is suspended, the status stored in the stack container may be updated to 'DISCONNECTED'.

In process block 415, connectivity between the continuation server and the handheld devices is maintained. In an embodiment, maintaining the connectivity includes continually monitoring the protocol connections between the continuation server and the handheld device, and updating the stack container. Maintaining also includes re-establishing the suspended protocol connection where the protocol connection between the handheld device and the continuation server is suspended. In process block 420, based upon a data notification received by the continuation server, the stack container is invoked (i.e. accessed) to retrieve the status of each protocol connection. A data notification includes an availability of data to be downloaded to the handheld devices. The continuation server may send a data alert to the polling agent of each handheld device based upon the availability of the corresponding protocol connection, for notifying the availability of data. In response to the data alert, the polling agent of each handheld device invokes a data synchronization module for downloading the data to the corresponding handheld device. In process block 425, based upon the statuses of the protocol connections, the data notification and the available data are forwarded from the continuation server to the handheld devices.

In an embodiment, the protocol connection between the corresponding handheld device and the continuation server may be suspended. The status of such a protocol connection residing in stack container may be updated to 'DISCONNECTED', indicating the suspension of the connection. During such suspension, the continuation server may send a suspension alert to the polling agent of a handheld device with a suspended protocol connection. Based upon the suspension alert, the polling agent is instructed to send a protocol connection request from the corresponding handheld device to the continuation server, to re-establish the corresponding suspended protocol connection. Based upon the re-established protocol connection, the continuation server may update the corresponding status in the stack container.

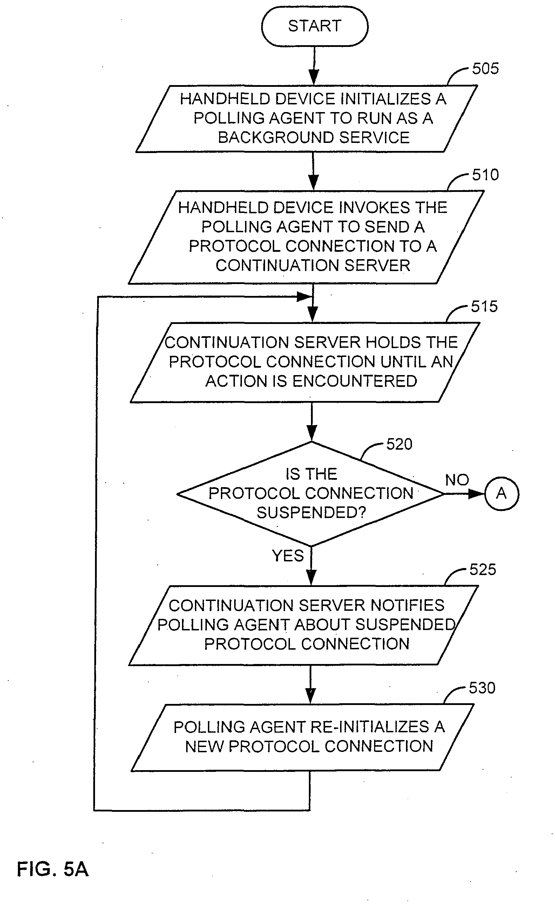

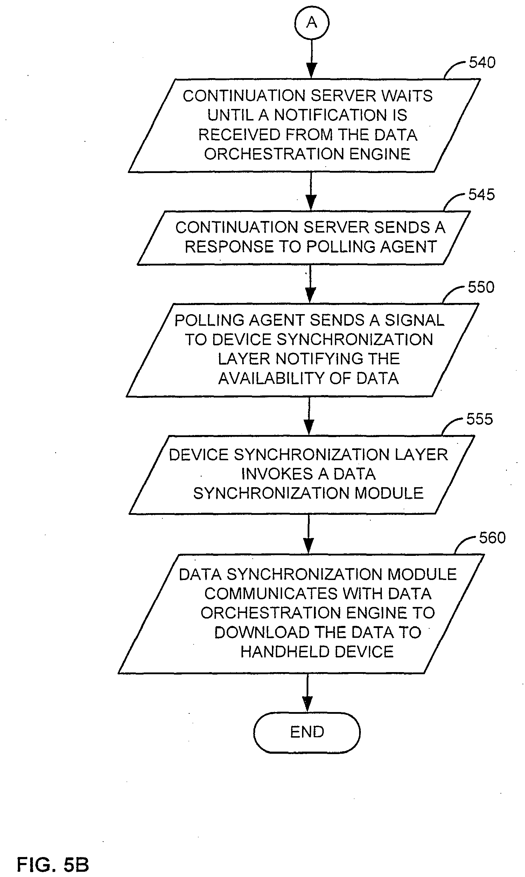

FIG. 5 is a functional flow diagram illustrating a method for forwarding data from a continuation server to handheld devices, according to an embodiment. In functional block 505, a handheld device initializes a polling agent to run as a background service in the handheld device. In an embodiment, the polling agent is included in the handheld device. In functional block 510, handheld device invokes the polling agent to establish a protocol connection between the handheld device and the continuation server. In an embodiment, a device synchronization layer associated with the handheld device initializes the polling agent to run as a background service in the handheld device. The device synchronization layer invokes the polling agent to run as a background service in the handheld device.

To establish a protocol connection between the handheld device and the continuation server, the polling agent sends a protocol connection request to the continuation server. In functional block 515, the continuation server holds the protocol connection of the handheld device until an action is encountered. In an embodiment, the continuation server creates a stack container to store a status of the protocol connection between the handheld device and the continuation server. The status of the protocol connection may include a 'CONNECTED' status and a 'DISCONNECTED' status to represent the status of the protocol connection. The continuation server monitors the protocol connection continually and updates the status of the connection in the stack container. For instance, a protocol connection of a handheld device may be having a 'CONNECTED' status at the beginning and at an end of a time period, the connection may have suspended due to a time-out. Since the continuation server continually monitors the status of the connection, the continuation server is able to update the status of the connection to 'DISCONNECTED' in the stack container.

In decision block 520, a determination is made about the type of action encountered, wherein the determination is if the protocol connection is suspended. The types of action may include a 'protocol connection being suspended' or a 'data notification being received'. If the protocol connection between the handheld device and the continuation server is suspended, the functional flow proceeds to functional block 525. If the protocol connection is not suspended, the functional flow proceeds to reference connector 'A'.

In functional block 525, the continuation server notifies the polling agent associated with the handheld device about the suspended protocol connection. In functional block 530, the polling agent re-initializes a new protocol connection between the corresponding handheld device and the continuation server. The functional flow proceeds to functional block 515, where the continuation server holds the connection until an action is encountered. In an embodiment, the stack container maintains the connectivity between the continuation server and the handheld devices. Maintaining the connectivity includes continually monitoring the protocol connections of the handheld devices and re-establishing the suspended protocol connections between the continuation server and the handheld device. The stack container is updated with the statuses of the protocol connections.

FIG. 5B is a functional flow diagram illustrating a method for forwarding data from a continuation server to handheld devices, according to an embodiment. Reference connector 'A' represents the steps carried out from functional block 505 to decision block 520. The functional flow when the protocol connection is not suspended begins from functional block 540. In functional block 540, the continuation server waits until a data notification is received from a data orchestration engine. The data notification may include an availability of data to be downloaded to the handheld device. Based upon the data notification received by the continuation server, in functional block 545, the continuation server sends a data alert to the polling agent to notify the availability of the data. In response to the data alert, in functional block 550, the polling agent sends a signal to a device synchronization layer notifying the availability of the data. In functional block 555, the device synchronization layer invokes a data synchronization module, which communicates with the data orchestration engine in functional block 560, to download the data to the handheld device.

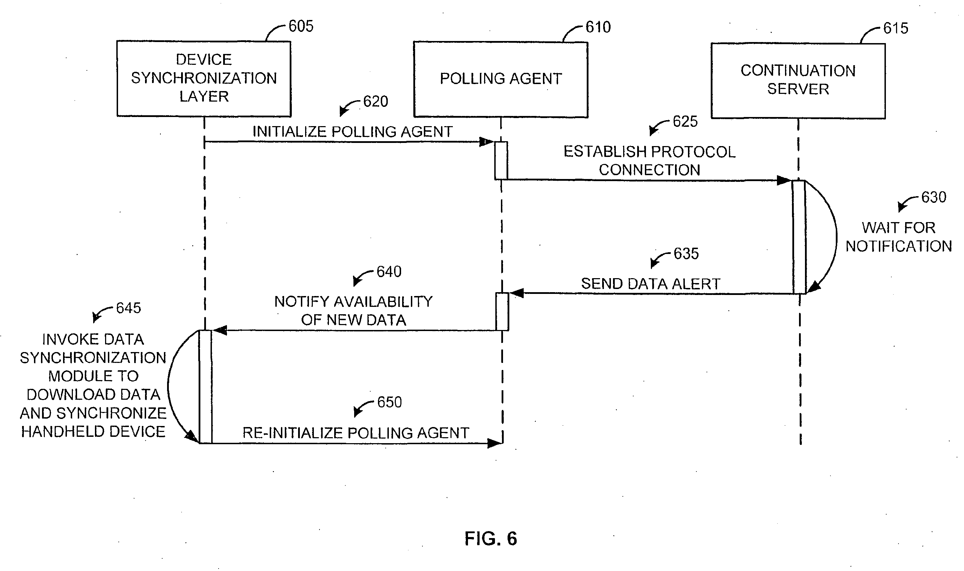

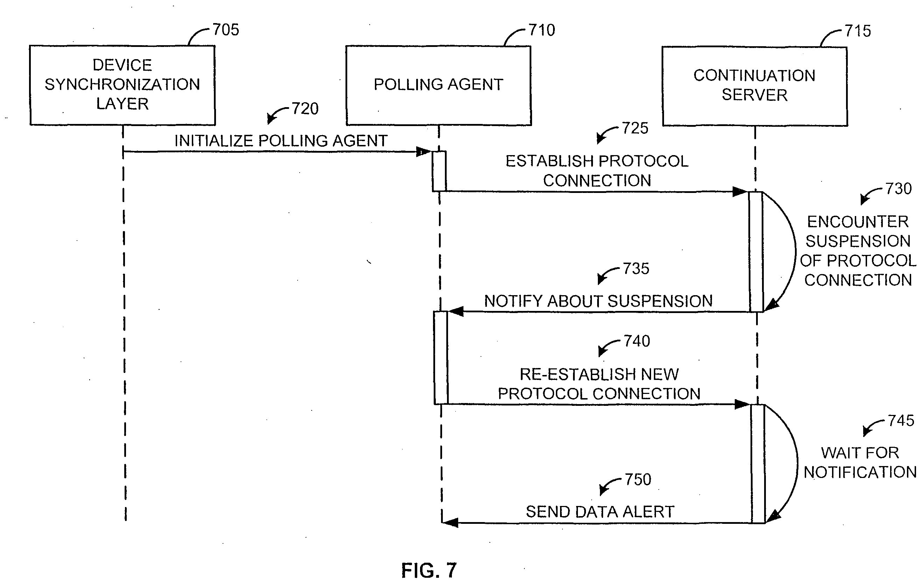

FIG. 6 and FIG. 7 are sequence diagrams illustrating a data flow for forwarding data from a continuation server to handheld devices, according to an embodiment. The sequence diagrams FIG. 6 and FIG. 7 represent all the interactions and the operations involved in the method for forwarding the data from the continuation server to the handheld devices. FIG. 6 and FIG. 7 illustrate process objects including device synchronization layer 605 and 705, polling agent 610 and 710 and continuation server 615 and 715, respectively, along with their respective vertical dotted lines originating from them. The vertical dotted lines of the device synchronization layer 605 and 705, polling agent 610 and 710 and continuation server 615 and 715, respectively, represent the processes that may exist simultaneously. The horizontal arrows (for e.g., 620, 625, and 635; and 720, 725, and 735) represent the data flow between the vertical dotted lines originating from their respective process objects (for e.g., 605, 610 and 615; and 705, 710, and 715). Activation boxes between the horizontal arrows represent the process that is being performed in the respective process object.

With reference to FIG. 6, device synchronization layer 605 initializes a polling agent 610 on each handheld device, to run as a background service. The activation box at the end of the horizontal arrow 620 represents this initialization of the polling agent 610. Polling agent 610 establishes a protocol connection 625 between polling agent 610 and continuation server 615. In an embodiment, the protocol connection is established by sending a protocol connection request from polling agent 610 to continuation server 615. Continuation server 615 holds the established protocol connection and waits for a data notification to be received 630.

The activation box at the end of the horizontal arrow 625 represents the instance when the continuation server holds the connection and waits for a data notification. The 'hold-and-wait' action of the continuation server may be referred to as maintaining the connectivity between the continuation server and the handheld devices. Maintaining the connectivity includes continually monitoring the protocol connections of the handheld devices and re-establishing the suspended protocol connections between the continuation server and the handheld device. The stack container is updated with the statuses of the protocol connections. The data notification includes an availability of data to be downloaded to the handheld device. In an embodiment, continuation server 615 creates a stack container to hold a status of the protocol connection, the status indicating an availability of the protocol connection between the handheld device and the continuation server. Continuation server 615 continually monitors the protocol connection and updates the status of the protocol connection in the stack container. If the protocol connection is established, the stack container may be updated with a 'CONNECTED' status, and if the protocol connection is suspended, the stack container may be updated with a 'DISCONNECTED' status.

Once the data notification is received, continuation server 615 sends a data alert 635 to polling agent 610. The activation box at the end of the horizontal arrow 635 represents the receiving of the data alert by polling agent 610. Based upon the received data alert, polling agent 610 notifies the availability of the new data 640 to device synchronization layer 605. Based upon this data notification, device synchronization layer 605 invokes data synchronization module to download data and synchronize the handheld device 645, e.g. with the data orchestration engine 165. The activation box at the end of the horizontal arrow 640 represents this synchronization. Once the handheld device is synchronized, device synchronization layer 605 re-initializes the polling agent 650 to polling agent 610. The sequence continues from horizontal arrow 625 where the protocol connection is established between polling agent 610 and continuation server 615.

With reference to FIG. 7, the horizontal arrows 720 and 725 are as explained in FIG. 6, at horizontal arrows 620 and 625. The sequential data flow when the protocol connection suspends begins from the arrow 730 at continuation server 715. The activation box at the end of the horizontal arrow 725 represents an instance when continuation server 715 encounters a suspension of the protocol connection 730 between polling agent 710 and continuation server 715. Continuation server 715 notifies polling agent 710 about the suspension of the protocol connection 735. The activation box at the end of the horizontal arrow 735 represents an action carried out by polling agent 710 as a result of the suspension, where polling agent 710 is advised to take the corresponding actions. Polling agent 710 re-establishes the suspended protocol connection 740 with continuation server 715. Re-establishing may be interpreted such that polling agent 710 establishes or initiates a new protocol connection with continuation server 715. Continuation server 715 holds the re-established protocol connection and waits for a data notification to be received 745. The activation box at the end of the horizontal arrow 740 represents the instance when the continuation server holds the connection and waits for a data notification. Once the data notification is received, continuation server 715 sends a data alert 750 to polling agent 710. The sequential data flow from when continuation server 715 sends the data alert 750 to polling agent 710 continues as explained in FIG. 6, at 635.

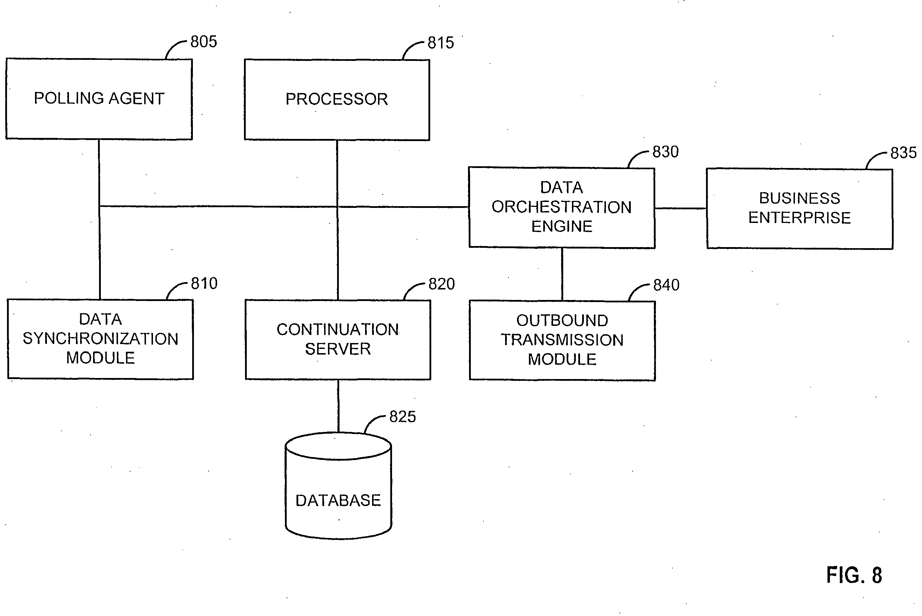

FIG. 8 is a block diagram illustrating a computer system for forwarding data from a continuation server to handheld devices, according to an embodiment. Computer system 800 includes polling agent 805, data synchronization module 810, processor 815, continuation server 820, database 825, data orchestration engine 830, and business enterprise 835. In an embodiment, polling agent 805 and data synchronization module 810 are in communication with processor 815 and continuation server 820. Continuation server 820 is in communication with database 825. Data orchestration engine 830 is in communication with processor 815 and continuation server 820, and business enterprise 835. In an embodiment, polling agent 805 and data synchronization module 810 are included in a handheld device. In another embodiment, outbound transmission module 840 is in communication with data orchestration engine 830.

In an embodiment, polling agent 805 is initialized to send a protocol connection request to continuation server 820 and establish a protocol connection with continuation server 820. In an embodiment, a handheld device includes an associated polling agent. Many such handheld devices establish corresponding protocol connections with continuation server 820 through their associated polling agents. In an embodiment, a device synchronization layer invokes polling agent 805 to run as a background service. Polling agent 805 is further invoked to send the protocol connection request to continuation server 820.

For the received protocol connections, processor 815 creates a stack container on continuation server 820, to store a status of each protocol connection. The status of a protocol connection indicates an availability of the protocol connection between the corresponding handheld device and continuation server 820. Continuation server 820 continually monitors the status of each protocol connection through processor 815, and updates the stack container with the current status of each protocol connection. For instance, a protocol connection of a handheld device 'MOBILE PHONE' connected to continuation server 820 may have a 'CONNECTED' status stored in the stack container, and if a protocol connection of the 'MOBILE PHONE' with the continuation server is suspended, the status stored in the stack container may be updated to 'DISCONNECTED'. Thus, the stack container includes a list of the protocol connections from the handheld devices along with their corresponding statuses. The statuses of the protocol connections are stored in the stack container until continuation server 820 receives a data notification or until the protocol connections are suspended. Thus, continuation server 820 holds the protocol connections from the handheld devices and waits until it encounters an action, where the action may include receiving a data notification or suspension of the protocol connection. Processor 815 associated with stack container maintains the connectivity between the continuation server 820 and the handheld devices. Maintaining the connectivity includes continually monitoring the protocol connections of the handheld devices and re-establishing the suspended protocol connections between the continuation server 820 and the handheld device. The stack container is updated with the statuses of the protocol connections.

Based upon a data notification received by continuation server 820, the stack container is invoked (i.e. accessed) by processor 815 to retrieve the statuses of the protocol connections. A data notification may include an availability of data to be downloaded on the handheld devices. For instance, a 'SOFTWARE UPDATE' may be available for the 'MOBILE PHONE', and the data notification of such an availability of data is received by continuation server 820. In an embodiment, data orchestration engine 830 may send such data notifications to continuation server 820 about an availability of data. Data orchestration engine 830 may identify the data notification available for the handheld device on business enterprise 835, and sends the data notifications along with the available data from business enterprise 835 to continuation server 820. In an embodiment, the 'SOFTWARE UPDATE' available for the "MOBILE PHONE' is residing in business enterprise 835.

In response to receiving the data notification, continuation server 820 sends a data alert to polling agent 805 of each handheld device based upon the availability of the corresponding protocol connection, for notifying the availability of data. In response to receiving the data alert, polling agent 805 sends a signal to the device synchronization layer to notify the availability of data. The device synchronization layer invokes data synchronization module 810 to communicate with data orchestration engine 830, and download the data to the handheld device. Data orchestration engine 830 forwards the data notification and the available data to data synchronization module 810 through continuation server 820, based upon the status of the protocol connection between continuation server 820 and polling agent 805 of the handheld device. The 'SOFTWARE UPDATE' available for the 'MOBILE DEVICE' is sent from business enterprise 835 to data synchronization module 810 associated with the 'MOBILE PHONE' through continuation server 820, based upon the 'CONNECTED' status of the protocol connection between continuation server 820 and the 'MOBILE DEVICE'.

In an embodiment, if the protocol connection between polling agent 805 and continuation server 820 is suspended, processor 815 associated with continuation server 820 sends a suspension alert to polling agent 805 of the associated handheld device. Polling agent 805 of the associated handheld device re-establishes the suspended protocol connection with continuation server 820. Polling agent 805 sends a protocol connection request to continuation server 820 to re-establish the suspended protocol connection. Processor 815 associated with continuation server 820 updates the stack container with the current status of the protocol connection with polling agent 805 of the handheld device, and holds the protocol connection until a data notification is received or until the protocol connection is suspended again.

In an embodiment, the handheld devices along with the associated polling agents 805 and the data synchronization modules 810 are included in a public network, and data orchestration engine 830 and business enterprise 835 are included in a private network. To forward the data available on business enterprise 835 for the handheld devices, continuation server 820 is installed on a network-interface zone, which is independent of the public network and the private network. Data orchestration engine 830 identifies the data available on business enterprise 835 and notifies continuation server 820. Continuation server 820 invokes (i.e. accesses or queries) the stack container to determine the statuses of each protocol connections between continuation server 820 and the corresponding handheld device. Based upon an availability of the protocol connection, continuation server 820 forwards the data notification and the available data to the corresponding handheld device.

In an embodiment, data orchestration engine 830 may have associated outbound transmission module 840. Outbound transmission module 840 accepts a registration of the handheld devices for receiving any data notifications available on business enterprise 835. When the data is available for the handheld devices, outbound transmission module 840 sends the data notification and the corresponding data alert to the handheld devices that are registered. Continuation server 820 includes the protocol connections from the corresponding handheld devices, enabling the forwarding of the data notification and the available data to the handheld devices and accessibility to data orchestration engine 830, enabling the receiving of the data notification.

Some embodiments of the invention may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments of the invention may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. Examples of computer readable storage media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment of the invention may be implemented using Java, C++, or other object-oriented programming language and development tools. Another embodiment of the invention may be implemented in hard-wired circuitry in place of, or in combination with machine readable software instructions.

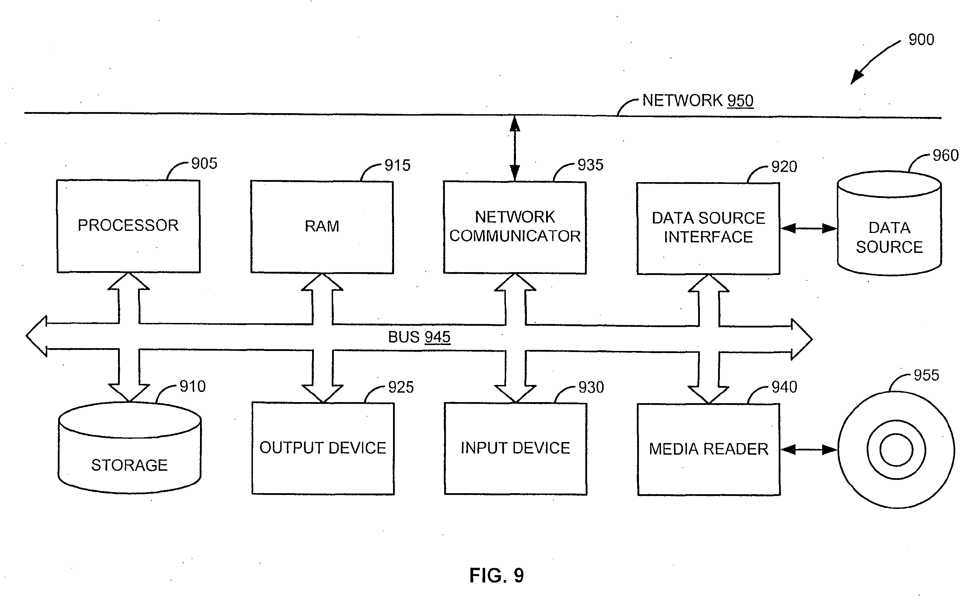

FIG. 9 is a block diagram of an exemplary computer system 900. The computer system 900 includes a processor 905 that executes software instructions or code stored on a computer readable storage medium 955 to perform the above-illustrated methods of the invention. The computer system 900 includes a media reader 940 to read the instructions from the computer readable storage medium 955 and store the instructions in storage 910 or in random access memory (RAM) 915. The storage 910 provides a large space for keeping static data where at least some instructions could be stored for later execution. The stored instructions may be further compiled to generate other representations of the instructions and dynamically stored in the RAM 915. The processor 905 reads instructions from the RAM 915 and performs actions as instructed. According to one embodiment of the invention, the computer system 900 further includes an output device 925 (e.g., a display) to provide at least some of the results of the execution as output including, but not limited to, visual information to users and an input device 930 to provide a user or another device with means for entering data and/or otherwise interact with the computer system 900. Each of these output devices 925 and input devices 930 could be joined by one or more additional peripherals to further expand the capabilities of the computer system 900. A network communicator 935 may be provided to connect the computer system 900 to a network 950 and in turn to other devices connected to the network 950 including other clients, continuation servers, data stores, and interfaces, for instance. The modules of the computer system 900 are interconnected via a bus 945. Computer system 900 includes a data source interface 920 to access data source 960. The data source 960 can be accessed via one or more abstraction layers implemented in hardware or software. For example, the data source 960 may be accessed by network 950. In some embodiments the data source 960 may be accessed via an abstraction layer, such as, a semantic layer.

A data source is an information resource. Data sources include sources of data that enable data storage and retrieval. Data sources may include databases, such as, relational, transaction, hierarchical, multi-dimensional (e.g., OLAP), object oriented databases, and the like. Further data sources include tabular data (e.g., spreadsheets, delimited text files), data tagged with a markup language (e.g., XML data), transaction data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

Various embodiments of systems and methods for forwarding data from a continuation server to handheld devices are disclosed. In an embodiment, protocol connections established from the handheld devices are received at the continuation server. A stack container is created on the continuation server, which stores a status of each protocol connection received. The status indicates an availability of the protocol connection between the corresponding handheld device and the continuation server. The stack container may hold the status of the protocol connection of each corresponding handheld device until the connection is suspended or until a data notification is received. The data notification may include an availability of data to be downloaded to the handheld devices.

It may be that connectivity between the continuation server and the handheld devices is maintained. Maintaining the connectivity may include continually monitoring the protocol connections of the handheld devices and re-establishing the suspended protocol connections between the continuation server and the handheld device. The stack container may be updated with the statuses of the protocol connections. Once a data notification is received by the continuation server, the stack container may be invoked to retrieve the status of each protocol connection. Based upon the availability of the protocol connections between the continuation server and the handheld devices, the data notification and the available data may be forwarded from the continuation server to the corresponding handheld devices.

In some cases, the protocol connection is received (e.g. at the continuation server) in response to initializing a polling agent on each handheld device, the polling agent configured to send a protocol connection request from the corresponding handheld device to the continuation server, and establishing the corresponding protocol connection between the corresponding handheld device and the continuation server.

Moreover, the stack container may hold the protocol connections along with the corresponding statuses until the data notification is received by the continuation server.

Furthermore, in response to the data notification received, the continuation server may send a data alert to the polling agent of each handheld device based upon the availability of the corresponding protocol connection, for notifying the availability of data.

Also, in response to the data alert, the polling agent of each handheld device may invoke a data synchronization module for downloading the data to the corresponding handheld device.

If the protocol connection between a handheld device and the continuation server is suspended, the continuation server may send a suspension alert to the corresponding handheld device. Based upon the suspension alert, the polling agent may send a protocol connection request from the handheld device to re-establish the suspended protocol connection between the handheld device and the continuation server. The status of the protocol connection in the stack container may be updated based upon the re-established protocol connection.

A data orchestration engine may be operable to identify one or more data notifications available for the handheld devices on a business enterprise (e.g. a business enterprise system or a business enterprise server), and send the data notifications along with available data from the business enterprise to the continuation server.

In addition, an outbound transmission module may be provided. The outbound transmission module may be in communication with the data orchestration engine to accept a registration of the handheld devices for receiving the data notifications. Also, the outbound transmission module may send the data notifications to the handheld devices that are registered with the outbound transmission medium.

Moreover, the handheld device may comprise the polling agent and the data synchronization module.

Also, the continuation server may store the created stack container on a database, and retrieves the stack container from the database based upon the data notification received.

Furthermore, a public network may comprise the handheld devices and/or a private network may comprise the data orchestration engine.

The continuation server may be installed on a network-interface zone, the network-interface zone being independent of the public network of the handheld devices and the private network of the data orchestration engine.

In some cases, the continuation server may receive the protocol connections from corresponding handheld devices, thereby enabling the forwarding of the data notification and the available data to the handheld devices. Also, the continuation server may provide an accessibility to the data orchestration engine, enabling the receiving of data notifications.

The disclosed subject matter may be implemented or as a computer implemented method, a computer system. The computer system may include one or more processors operable for reading and executing instructions stored in one or more memory elements. The disclosed subject matter may also be implemented as a computer program product, e.g. an article of manufacture, possibly including a computer readable medium to tangibly store instructions, which when executed by a computer, cause the computer to carry out one or more of the described embodiments.

In the above description, numerous specific details are set forth to provide a thorough understanding of embodiments of the invention. One skilled in the relevant art will recognize, however that the invention can be practiced without one or more of the specific details or with other methods, components, techniques, etc. In other instances, well-known operations or structures are not shown or described in details to avoid obscuring aspects of the invention.

Although the processes illustrated and described herein include series of steps, it will be appreciated that the different embodiments of the present invention are not limited by the illustrated ordering of steps, as some steps may occur in different orders, some concurrently with other steps apart from that shown and described herein. In addition, not all illustrated steps may be required to implement a methodology in accordance with the present invention. Moreover, it will be appreciated that the processes may be implemented in association with the apparatus and systems illustrated and described herein as well as in association with other systems not illustrated.

The above descriptions and illustrations of embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize. These modifications can be made to the invention in light of the above detailed description. Rather, the scope of the invention is to be determined by the following claims, which are to be interpreted in accordance with established doctrines of claim construction.

## Claims

1. A computer implemented method for forwarding data from a continuation server (150,250,615,715,820) to one or more handheld devices (105,120,135, 205,220,235), comprising:
receiving (405) at the continuation server (150,250,615,715,820), one or more protocol connection requests from a polling agent (215,230, 245,610,710) of the corresponding handheld devices (105,120,135, 205,220,235), wherein initiating the protocol connections requires the continuation server (150,250,615,715,820) to store, in a memory of the continuation server (150,250,615,715,820), Internet Protocol (IP) addresses of the corresponding handheld devices (105,120,135, 205,220,235);
for the received protocol connection requests, creating (410) a stack container (155,255,305) on the continuation server (150,250,615,715,820) to store a status of each protocol connection,
the status indicating an availability of the protocol connections between the corresponding handheld devices (105,120,135, 205,220,235) and the continuation server (150,250,615,715,820),
wherein the statuses of the protocol connections include a CONNECTED status and a DISCONNECTED status,
wherein the CONNECTED status indicates that the protocol connection is established and the DISCONNECTED status indicates that the protocol connection is suspended;
establishing a protocol connection between the one or more handheld devices (105,120,135, 205,220,235) and the continuation server (150,250,615,715,820);
maintaining (415) connectivity between the continuation server (150,250,615, 715,820) and the one or more handheld devices (105,120,135, 205,220,235), the maintaining comprising:
suspending, by the continuation server (150,250,615, 715,820), the protocol connection between the continuation server (150,250,615,715,820) and one of the handheld devices (105,120,135, 205,220,235) after a predefined period of inactivity;
if the protocol connection between the continuation server (150,250,615,715,820) and one of the handheld devices (105,120,135, 205,220,235) is suspended, sending (525,735) a suspension alert to the polling agent (215,230, 245,610,710) of the handheld device with the suspended protocol connection;
based upon the suspension alert received at the polling agent (215,230, 245,610,710) of the handheld device with the suspended protocol connection, reestablishing (530, 740) the suspended protocol connection by the polling agent (215,230, 245,610,710) sending a protocol connection request to the continuation server (150, 250, 615, 715, 820) from the handheld device with the suspended protocol connection;
invoking (420) the stack container (155,255,305) to retrieve the status of each protocol connection, based upon a data notification indicating an availability of data to be downloaded to the handheld devices (105,120,135, 205,220,235), received at the continuation server (150,250,615,715,820); and
when the statuses of the protocol connections indicate that the protocol connections are not suspended, forwarding (425) the data notification and the available data from the continuation server (150,250,615,715,820) to the corresponding handheld devices (105,120,135, 205,220,235).

2. The computer implemented method of claim 1, wherein the one or more protocol connections are received in response to:
initializing (505,620,720) the polling agent (215,230, 245,610,710) on each handheld device; and
establishing (510,625,725) the corresponding protocol connection between the corresponding handheld device and the continuation server (150,250,615, 715,820).

3. The computer implemented method of claim 1 or 2, wherein the stack container (155,255,305) holds the protocol connections along with the corresponding statuses until the data notification is received by the continuation server (150,250, 615,715,820).

4. The computer implemented method of any one of the preceding claims, wherein, in response to the data notification received, the continuation server (150, 250,615,715,820) sends (635, 750) a data alert to the polling agent (215,230,245, 610,710) of each handheld device based upon the availability of the corresponding protocol connection, for notifying the availability of data.

5. The computer implemented method of claim 4, wherein in response to the data alert, the polling agent (215,230, 245,610,710) of each handheld device invokes a data synchronization module for downloading the data to the corresponding handheld device.

6. The computer implemented method of any one of the preceding claims, wherein the stack container (155,255,305) holds the protocol connections along with the corresponding statuses until the protocol connections between the corresponding handheld devices (105,120,135, 205,220,235) and continuation server (150,250,615, 715,820) are suspended.

7. The computer implemented method of any one of the preceding claims, wherein maintaining connectivity comprises:
continually monitoring the protocol connections of the handheld devices (105,120,135, 205,220,235);
re-establishing the suspended protocol connections between the continuation server (150,250,615,715,820) and the handheld devices (105,120,135, 205,220,235); and
updating the stack container (155,255,305) with the statuses of the protocol connections.

8. The computer implemented method of any one of the preceding claims, further comprising:
identifying, by a data orchestration engine (165,830), one or more data notifications available for the handheld devices (105,120,135, 205,220,235) on a business enterprise; and
sending, by the data orchestration engine (165,830), the data notifications along with available data from the business enterprise to the continuation server (150,250,615,715,820);
wherein the continuation server (150,250,615,715,820) may be installed on a network-interface zone, wherein the network-interface zone may be independent of the public network of the handheld devices (105,120,135, 205,220,235) and/or the private network of the data orchestration engine (165,830).

9. The computer implemented method of claim 8, further comprising,
receiving, by the continuation server (150,250,615,715,820), the protocol connections from corresponding handheld devices (105,120,135, 205,220,235), thereby enabling the forwarding of the data notification and the available data to the handheld devices (105,120,135, 205,220,235); and
providing, by the continuation server (150,250,615,715,820), an accessibility to the data orchestration engine (165,830), thereby enabling receipt of data notifications.

10. A computer system for forwarding data from a continuation server (150,250, 615,715,820) to one or more handheld devices (105,120,135, 205,220,235), comprising:
one or more processors operable for reading and executing instructions stored in one or more memory elements; and
the one or more memory elements storing instructions for:
a polling agent (215,230, 245,610,710) to send one or more protocol connection requests from the handheld devices (105,120,135, 205,220,235) to the continuation server (150,250,615, 715,820), wherein initiating the protocol connections requires the continuation server (150,250,615,715,820) to store, in a memory of the continuation server (150,250,615,715,820), Internet Protocol (IP) addresses of the corresponding handheld devices (105,120,135, 205,220,235);
the one or more processors to create a stack container (155,255,305) on the continuation server (150,250,615,715,820) for storing a status of each protocol connection,
indicating the availability of the protocol connections between the corresponding handheld devices (105,120,135, 205,220,235) and the continuation server (150,250,615,715,820),
wherein the statuses of the protocol connections include a CONNECTED status and a DISCONNECTED status,
wherein the CONNECTED status indicates that the protocol connection is established and the DISCONNECTED status indicates that the protocol connection is suspended;
the continuation server (150,250,615,715,820) to establish a protocol connection between the one or more handheld devices (105,120,135, 205,220,235) and the continuation server (150,250,615,715,820);
the continuation server (150,250,615,715,820) to maintain connectivity with the one or more handheld devices (105,120,135, 205,220,235) and to invoke the stack container (155,255,305) and retrieve the status of each protocol connection, based upon a data notification received, the maintaining comprising:
suspending, by the continuation server (150,250,615, 715,820), the protocol connection between the continuation server (150,250,615,715,820) and one of the handheld devices (105,120,135, 205,220,235) after a predefined period of inactivity;
if the protocol connection between the continuation server (150,250,615,715,820) and one of the handheld devices (105,120,135, 205,220,235) is suspended, the continuation server (150,250,615, 715,820) to send (525,735) a suspension alert to the polling agent (215,230, 245,610,710) of the handheld device with the suspended protocol connection;
based upon the suspension alert received at the polling agent (215,230, 245,610,710) of the handheld device with the suspended protocol connection, the polling agent (215,230, 245,610,710) of the handheld device to reestablish (530, 740) the suspended protocol connection by sending a protocol connection request to the continuation server (150, 250, 615, 715, 820) from the handheld device with the suspended protocol connection; and
a data synchronization module to receive the data notification and the available data forwarded from the continuation server (150,250,615,715,820) to the handheld devices (105,120,135, 205,220,235), when the statuses of the protocol connections indicate that the protocol connections are not suspended.

11. The computer system of claim 10 further comprising:
a data orchestration engine (165,830) to identify one or more data notifications available for the handheld devices (105,120,135, 205,220,235) on a business enterprise, and to send the data notifications from the business enterprise to the continuation server (150,250,615,715,820); and
an outbound transmission module in communication with the data orchestration engine (165,830) to accept a registration of the handheld devices (105, 120,135,205,220,235) for receiving the data notifications, and to send the data notifications to the handheld devices (105,120,135, 205,220,235) that are registered with the outbound transmission medium.

12. The computer system of claim 10 or 11, wherein the handheld device comprises the polling agent (215,230, 245,610,710) and the data synchronization module;
wherein the continuation server (150,250,615,715,820) is adapted to store the created stack container (155,255,305) on a database, and
wherein the continuation server (150,250,615,715,820) is adapted to retrieve the stack container (155,255,305) from the database based upon the data notification received.

13. A computer program product comprising computer-readable instructions, which, when loaded and executed on a computer system, cause the computer system to perform operations according to the method of any one of claims 1 to 9.

## Patentansprüche

1. Computerimplementiertes Verfahren zur Weiterleitung von Daten von einem Weiterleitungsserver (150, 250, 615, 715, 820) an eine oder mehrere Handheld-Vorrichtungen (105, 120, 135, 205, 220, 235), umfassend:
Empfangen (405) an dem Weiterleitungsserver (150, 250, 615, 715, 820) einer oder mehrerer Protokollverbindungsaufforderungen von einem Abfrageagenten (215, 230, 245, 610, 710) der entsprechenden Handheld-Vorrichtungen (105, 120, 135, 205, 220, 235), wobei das Einleiten der Protokollverbindungen erfordert, dass der Weiterleitungsserver (150, 250, 615, 715, 820), in einem Speicher des Weiterleitungsservers (150, 250, 615, 715, 820), Internetprotokoll (IP)-Adressen der entsprechenden Handheld-Vorrichtungen (105, 120, 135, 205, 220, 235) speichert;
Erzeugen (410) für die empfangenen Protokollverbindungsaufforderungen eines Stapelspeichers (155, 255, 305) auf dem Weiterleitungsserver (150, 250, 615, 715, 820) zum Speichern eines Status jeder Protokollverbindung,
den Status, der eine Verfügbarkeit der Protokollverbindungen zwischen den entsprechenden Handheld-Vorrichtungen (105, 120, 135, 205, 220, 235) und dem Weiterleitungsserver (150, 250, 615, 715, 820) angibt,
wobei die Status der Protokollverbindungen einen VERBUNDEN-Status und einen GETRENNT-Status umfassen,
wobei der VERBUNDEN-Status angibt, dass die Protokollverbindung aufgebaut ist und der GETRENNT-Status angibt, dass die Protokollverbindung unterbrochen ist;
Aufbauen einer Protokollverbindung zwischen der einen oder den mehreren Handheld-Vorrichtungen (105, 120, 135, 205, 220, 235) und dem Weiterleitungsserver (150, 250, 615, 715, 820);
Aufrechterhalten (415) der Konnektivität zwischen dem Weiterleitungsserver (150, 250, 615, 715, 820) und der einen oder den mehreren Handheld-Vorrichtungen (105, 120, 135, 205, 220, 235), wobei das Aufrechterhalten Folgendes umfasst:
Unterbrechen durch den Weiterleitungsserver (150, 250, 615, 715, 820) der Protokollverbindung zwischen dem Weiterleitungsserver (150, 250, 615, 715, 820) und einer der Handheld-Vorrichtungen (105, 120, 135, 205, 220, 235) nach einem vorgegebenen Inaktivitätszeitraum;
wenn die Protokollverbindung zwischen dem Weiterleitungsserver (150, 250, 615, 715, 820) und einer der Handheld-Vorrichtungen (105, 120, 135, 205, 220, 235) unterbrochen ist, Senden (525, 735) einer Unterbrechungsbenachrichtigung an den Abfrageagenten (215, 230, 245, 610, 710) der Handheld-Vorrichtung mit der unterbrochenen Protokollverbindung;
basierend auf der Unterbrechungsbenachrichtigung, die von dem Abfrageagenten (215, 230, 245, 610, 710) der Handheld-Vorrichtung mit der unterbrochenen Protokollverbindung empfangen wird, Wiederaufbauen (530, 740) der unterbrochenen Protokollverbindung durch den Abfrageagenten (215, 230, 245, 610, 710), Senden einer Protokollverbindungsaufforderung an den Weiterleitungsserver (150, 250, 615, 715, 820) von der Handheld-Vorrichtung mit der unterbrochenen Protokollverbindung;
Aufrufen (420) des Stapelspeichers (155, 255, 305), um den Status jeder Protokollverbindung abzurufen, basierend auf einer Datenmeldung, die eine Verfügbarkeit von herunterzuladenden Daten auf die Handheld-Vorrichtungen (105, 120, 135, 205, 220, 235) angibt, der am Weiterleitungsserver (150, 250, 615, 715, 820) empfangen wird; und
wenn die Status der Protokollverbindungen angeben, dass die Protokollverbindungen nicht unterbrochen sind, Weiterleiten (425) der Datenmeldung und der verfügbaren Daten von dem Weiterleitungsserver (150, 250, 615, 715, 820) an die entsprechenden Handheld-Vorrichtungen (105, 120,135,205,220,235).

2. Computerimplementiertes Verfahren nach Anspruch 1, wobei die eine oder mehrere Protokollverbindungen empfangen werden als Antwort auf:
Initialisieren (505, 620, 720) des Abfrageagenten (215, 230, 245, 610, 710) auf jeder Handheld-Vorrichtung; und
Aufbauen (510, 625, 725) der entsprechenden Protokollverbindung zwischen der entsprechenden Handheld-Vorrichtung und dem Weiterleitungsserver (150, 250, 615, 715, 820).

3. Computerimplementiertes Verfahren nach Anspruch 1 oder 2, wobei der Stapelspeicher (155, 255, 305) die Protokollverbindungen zusammen mit den entsprechenden Status hält, bis die Datenmeldung von dem Weiterleitungsserver (150, 250, 615, 715, 820) empfangen wird.

4. Computerimplementiertes Verfahren nach einem der vorhergehenden Ansprüche, wobei, als Antwort auf die empfangene Datenmeldung, der Weiterleitungsserver (150, 250, 615, 715, 820) eine Datenbenachrichtigung an den Abfrageagenten (215, 230, 245, 610, 710) jeder Handheld-Vorrichtung basierend auf der Verfügbarkeit der entsprechenden Protokollverbindung, sendet (635, 750), um die Verfügbarkeit von Daten zu melden.

5. Computerimplementiertes Verfahren nach Anspruch 4, wobei als Antwort auf die Datenbenachrichtigung der Abfrageagent (215, 230, 245, 610, 710) jeder Handheld-Vorrichtung ein Datensynchronisationsmodul aufruft, um Daten auf die entsprechende Handheld-Vorrichtung herunterzuladen.

6. Computerimplementiertes Verfahren nach einem der vorhergehenden Ansprüche, wobei der Stapelspeicher (155, 255, 305) die Protokollverbindungen zusammen mit den entsprechenden Status hält, bis die Protokollverbindungen zwischen den entsprechenden Handheld-Vorrichtungen (105, 120, 135, 205, 220, 235) und dem Weiterleitungsserver (150, 250, 615, 715, 820) unterbrochen sind.

7. Computerimplementiertes Verfahren nach einem der vorhergehenden Ansprüche, wobei das Aufrechterhalten der Konnektivität Folgendes umfasst:
Kontinuierliches Überwachen der Protokollverbindungen der Handheld-Vorrichtungen (105, 120, 135, 205, 220, 235);
Wiederherstellen der unterbrochenen Protokollverbindungen zwischen dem Weiterleitungsserver (150, 250, 615, 715, 820) und den Handheld-Vorrichtungen (105, 120, 135, 205, 220, 235); und
Aktualisieren des Stapelspeichers (155, 255, 305) mit den Status der Protokollverbindungen.

8. Computerimplementiertes Verfahren nach einem der vorhergehenden Ansprüche, überdies umfassend:
Identifizieren, durch eine Data Orchestration-Engine (165, 830), einer oder mehrerer Datenmeldungen, die für die Handheld-Vorrichtungen (105, 120, 135, 205, 220, 235) in einem Unternehmen verfügbar sind; und
Senden der Datenmeldungen zusammen mit verfügbaren Daten von dem Unternehmen an den Weiterleitungsserver (150, 250, 615, 715, 820) mit einer Data Orchestration Engine (165, 830);
wobei der Weiterleitungsserver (150, 250, 615, 715, 820) auf einem Netzwerkschnittstellenbereich installiert sein kann, wobei der Netzwerkschnittstellenbereich unabhängig von dem öffentlichen Netzwerk der Handheld-Vorrichtungen (105, 120, 135, 205, 220, 235) und/oder von dem privaten Netzwerk der Datenorchestrierungs-Engine (165, 830) sein kann.

9. Computerimplementiertes Verfahren nach Anspruch 8, überdies umfassend:
Empfangen, durch den Weiterleitungsserver (150, 250, 615, 715, 820), der Protokollverbindungen von den entsprechenden Handheld-Vorrichtungen (105, 120, 135, 205, 220, 235), wodurch die Weiterleitung der Datenmeldung und der verfügbaren Daten an die Handheld-Vorrichtungen (105, 120, 135, 205, 220, 235) ermöglicht wird; und
Bereitstellen, durch den Weiterleitungsserver (150, 250, 615, 715, 820), einer Zugangsmöglichkeit zu der Data Orchestration Engine (165, 830), wodurch der Empfang der Datenmeldungen ermöglicht wird.

10. Computerimplementiertes Verfahren zur Weiterleitung von Daten von einem Weiterleitungsserver (150, 250, 615, 715, 820) an eine oder mehrere Handheld-Vorrichtungen (105, 120, 135, 205, 220, 235), umfassend:
ein oder mehrere Prozessoren, die betriebsfähig sind, Anweisungen zu lesen und auszuführen, die in einem oder mehreren Speicherelementen gespeichert sind; und
das eine oder die mehreren Speicherelemente, die Anweisungen speichern für:
einen Abfrageagenten (215, 230, 245, 610, 710) zum Senden einer oder mehrerer Protokollverbindungsaufforderungen von den Handheld-Vorrichtungen (105, 120, 135, 205, 220, 235) an den Weiterleitungsserver (150, 250, 615, 715, 820), wobei das Einleiten der Protokollverbindungen erfordert, dass der Weiterleitungsserver (150, 250, 615, 715, 820), in einem Speicher des Weiterleitungsserver (150, 250, 615, 715, 820), die Internet Protokoll (IP)-Adressen der entsprechenden Handheld-Vorrichtungen (105, 120, 135, 205, 220, 235) speichert;
den einen oder die mehreren Prozessoren zum Erstellen eines Stapelspeichers (155, 255, 305) auf dem Weiterleitungsserver (150, 250, 615, 715, 820) zum Speichern eines Status jeder Protokollverbindung,
Angeben der Verfügbarkeit von Protokollverbindungen zwischen den entsprechenden Handheld-Vorrichtungen (105, 120, 135, 205, 220, 235) und dem Weiterleitungsserver (150, 250, 615, 715, 820),
wobei die Status der Protokollverbindungen einen VERBUNDEN-Status und einen GETRENNT-Status umfassen,
wobei der VERBUNDEN-Status angibt, dass die Protokollverbindung aufgebaut ist und der GETRENNT-Status angibt, dass die Protokollverbindung unterbrochen ist;
den Weiterleitungsserver (150, 250, 615, 715, 820) zum Aufbauen einer Protokollverbindung zwischen der einen oder den mehreren Handheld-Vorrichtungen (105, 120, 135, 205, 220, 235) und dem Weiterleitungsserver (150, 250, 615, 715, 820);
den Weiterleitungsserver (150, 250, 615, 715, 820) zum Aufrechterhalten der Konnektivität mit der einen oder den mehreren Handheld-Vorrichtungen (105, 120, 135, 205, 220, 235) und zum Aufrufen des Stapelspeichers (155, 255, 305) und Abrufen der Status von jeder Protokollverbindung, basierend auf einer empfangenen Datenmeldung, wobei das Aufrechterhalten Folgendes umfasst:
Unterbrechen, durch den Weiterleitungsserver (150, 250, 615, 715, 820), der Protokollverbindung zwischen dem Weiterleitungsserver (150, 250, 615, 715, 820) und einer der Handheld-Vorrichtungen (105, 120, 135, 205, 220, 235) nach einem vorgegebenen Inaktivitätszeitraum;
wenn die Protokollverbindung zwischen dem Weiterleitungsserver (150, 250, 615, 715, 820) und einer der Handheld-Vorrichtungen (105, 120, 135, 205, 220, 235) unterbrochen ist, der Weiterleitungsserver (150, 250, 615, 715, 820) eine Unterbrechungsbenachrichtigung an den Abfrageagenten (215, 230, 245, 610, 710) der Handheld-Vorrichtung mit der unterbrochenen Protokollverbindung sendet (525, 735);
basierend auf der am Abfrageagenten (215, 230, 245, 610, 710) der Handheld-Vorrichtung mit dem unterbrochenen Protokollverbindung empfangenen Unterbrechungsbenachrichtigung, den Abfrageagenten (215, 230, 245, 610, 710) der Handheld-Vorrichtung zum Wiederherstellen (530, 740) der unterbrochenen Protokollverbindung durch Senden einer Protokollverbindungsaufforderung an den Weiterleitungsserver (150, 250, 615, 715, 820) von der Handheld-Vorrichtung mit der unterbrochenen Protokollverbindung; und
ein Datensynchronisationsmodul zum Empfangen der Datenmeldung und der verfügbaren Daten, die von dem Weiterleitungsserver (150, 250, 615, 715, 820) an die Handheld-Vorrichtungen (105, 120, 135, 205, 220, 235) weitergeleitet werden, wenn die Status der Protokollverbindungen anzeigen, dass die Protokollverbindungen nicht unterbrochen sind.

11. Computersystem nach Anspruch 10, überdies umfassend:
eine Data Orchestration Engine (165, 830) zum Identifizieren einer oder mehrerer Datenmeldungen, die für die Handheld-Vorrichtungen (105, 120, 135, 205, 220, 235) in einem Unternehmen verfügbar sind, und Senden der Datenmeldungen von dem Unternehmen an den Weiterleitungsserver (150, 250, 615, 715, 820); und
ein nach außen gerichtetes Übertragungsmodul in Kommunikation mit der Data Orchestration Engine (165, 830) zum Akzeptieren einer Registrierung der Handheld-Vorrichtungen (105, 120, 135, 205, 220, 235) zum Empfangen der Datenmeldungen, und Senden der Datenmeldungen an die Handheld-Vorrichtungen (105, 120, 135, 205, 220, 235), die bei dem nach außen gerichteten Übertragungsmedium registriert sind.

12. Computersystem nach Anspruch 10 oder 11, wobei die Handheld- Vorrichtung den Abfrageagenten (215, 230, 245, 610, 710) und das Datensynchronisationsmodul umfasst;
wobei der Weiterleitungsserver (150, 250, 615, 715, 820) angepasst ist, den erstellten Stapelspeicher (155, 255, 305) auf einer Datenbank zu speichern und
wobei der Weiterleitungsserver (150, 250, 615, 715, 820) angepasst ist, den Stapelspeicher (155, 255, 305) basierend auf der empfangenen Datenmeldung von der Datenbank abzurufen.

13. Computerprogrammprodukt, das computerlesbare Anweisungen umfasst, die, wenn geladen und auf einem Computersystem ausgeführt, das Computersystem veranlassen, Operationen nach dem Verfahren nach einem der Ansprüche 1 bis 9 auszuführen.

## Revendications

1. Procédé mis en oeuvre par ordinateur pour transférer des données à partir d'un serveur de continuation (150, 250, 615, 715, 820) vers un ou plusieurs dispositifs portatifs (105, 120, 135, 205, 220, 235), comprenant :
la réception (405), au niveau du serveur de continuation (150, 250, 615, 715, 820), d'une ou plusieurs requêtes de connexion de protocole en provenance d'un agent d'interrogation (215, 230, 245, 610, 710) des dispositifs portatifs (105, 120, 135, 205, 220, 235) correspondants, dans lequel le lancement des connexions de protocole exige que le serveur de continuation (150, 250, 615, 715, 820) enregistre, dans une mémoire du serveur de continuation (150, 250, 615, 715, 820), des adresses de Protocole Internet (IP) des dispositifs portatifs (105, 120, 135, 205, 220, 235) correspondants;
pour les requêtes de connexions de protocole reçues, la création (410) d'un conteneur de piles (155, 255, 305) sur le serveur de continuation (150, 250, 615, 715, 820) pour enregistrer un état de chaque connexion de protocole,
l'état indiquant une disponibilité des connexions de protocole entre les dispositifs portatifs (105, 120, 135, 205, 220, 235) correspondants et le serveur de continuation (150, 250, 615, 715, 820),
dans lequel les états des connexions de protocole incluent un état CONNECTE et un état DECONNECTE,
dans lequel l'état CONNECTE indique que la connexion de protocole est établie, et l'état DECONNECTE indique que la connexion de protocole est suspendue ;
l'établissement d'une connexion de protocole entre le ou les dispositifs portatifs (105, 120, 135, 205, 220, 235) et le serveur de continuation (150, 250, 615, 715, 820) ;
le maintien (415) de la connectivité ente le serveur de continuation (150, 250, 615, 715, 820) et le ou les dispositifs portatifs (105, 120, 135, 205, 220, 235), le maintien comprenant :
la suspension, par le serveur de continuation (150, 250, 615, 715, 820), de la connexion de protocole entre le serveur de continuation (150, 250, 615, 715, 820) et l'un des dispositifs portatifs (105, 120, 135, 205, 220, 235) après une période d'inactivité prédéfinie ;
si la connexion de protocole entre le serveur de continuation (150, 250, 615, 715, 820) et l'un des dispositifs portatifs (105, 120, 135, 205, 220, 235) est suspendue, l'envoi (525, 735) d'une alerte de suspension à l'agent d'interrogation (215, 230, 245, 610, 710) du dispositif portatif avec la connexion de protocole suspendue ;
sur la base de l'alerte de suspension reçue au niveau de l'agent d'interrogation (215, 230, 245, 610, 710) du dispositif portatif avec la connexion de protocole suspendue, le rétablissement (530, 740) de la connexion de protocole suspendue par l'agent d'interrogation (215, 230, 245, 610, 710) envoyant une requête de connexion de protocole au serveur de continuation (150, 250, 615, 715, 820) à partir du dispositif portatif avec la connexion de protocole suspendue ;
la demande (420) adressée au conteneur de piles (155, 255, 305) de récupérer l'état de chaque connexion de protocole sur la base d'une notification de données indiquant une disponibilité de données à télécharger vers les dispositifs portatifs (105, 120, 135, 205, 220, 235), reçue au niveau du serveur de continuation (150, 250, 615, 715, 820) ; et
quand les états des connexions de protocole indiquent que les connexions de protocole ne sont pas suspendues, le transfert (425) de la notification de données et des données disponibles à partir du serveur de continuation (150, 250, 615, 715, 820) vers les dispositifs portatifs (105, 120, 135, 205, 220, 235) correspondants.

2. Procédé mis en oeuvre par ordinateur selon la revendication 1, dans lequel le ou les connexions de protocole sont reçues en réponse à :
l'initialisation (505, 620, 720) de l'agent d'interrogation (215, 230, 245, 610, 710) sur chaque dispositif portatif ; et
l'établissement (510, 625, 725) de la connexion de protocole correspondante entre le dispositif portatif correspondant et le serveur de continuation (150, 250, 615, 715,820).

3. Procédé mis en oeuvre par ordinateur selon la revendication 1 ou 2, dans lequel le conteneur de piles (155, 255, 305) retient les connexions de protocole ainsi que les états correspondants jusqu'à la réception de la notification de données par le serveur de continuation (150, 250, 615, 715, 820).

4. Procédé mis en oeuvre par ordinateur selon l'une quelconque des revendications précédentes, dans lequel, en réponse à la notification de données reçue, le serveur de continuation (150, 250, 615, 715, 820) envoie (635, 750) une alerte de données à l'agent d'interrogation (215, 230, 245, 610, 710) de chaque dispositif portatif sur la base de la disponibilité de la connexion de protocole correspondante, pour notifier la disponibilité de données.

5. Procédé mis en oeuvre par ordinateur selon la revendication 4, dans lequel, en réponse à l'alerte de données, l'agent d'interrogation (215, 230, 245, 610, 710) de chaque dispositif portatif demande à un module de synchronisation de données de télécharger les données vers le dispositif portatif correspondant.

6. Procédé mis en oeuvre par ordinateur selon l'une quelconque des revendications précédentes, dans lequel le conteneur de piles (155, 255, 305) retient les connexions de protocole ainsi que les états correspondants jusqu'à la suspension des connexions de protocole entre les dispositifs portatifs (105, 120, 135, 205, 220, 235) correspondants et le serveur de continuation (150, 250, 615, 715, 820).

7. Procédé mis en oeuvre par ordinateur selon l'une quelconque des revendications précédentes, dans lequel le maintien de la connectivité comprend :
la surveillance continue des connexions de protocole des dispositifs portatifs (105, 120, 135, 205, 220, 235) ;
le rétablissement des connexions de protocole suspendues entre le serveur de continuation (150, 250, 615, 715, 820) et les dispositifs portatifs (105, 120, 135, 205, 220, 235) ; et
l'actualisation du conteneur de piles (155, 255, 305) avec les états des connexions de protocole.

8. Procédé mis en oeuvre par ordinateur selon l'une quelconque des revendications précédentes, comprenant également :
l'identification, par un moteur d'orchestration de données (165, 830), d'une ou de plusieurs notifications de données disponibles pour les dispositifs portatifs (105, 120, 135, 205, 220, 235) sur une entreprise commerciale ; et
l'envoi, par le moteur d'orchestration de données (165, 830), des notifications de données ainsi que des données disponibles à partir de l'entreprise commerciale vers le serveur de continuation (150, 250, 615, 715, 820) ;
dans lequel le serveur de continuation (150, 250, 615, 715, 820) peut être installé sur une zone d'interface réseau, dans lequel la zone d'interface réseau peut être indépendante du réseau public des dispositifs portatifs (105, 120, 135, 205, 220, 235) et/ou du réseau privé du moteur d'orchestration de données (165, 830).

9. Procédé mis en oeuvre par ordinateur selon la revendication 8, comprenant également
la réception, par le serveur de continuation (150, 250, 615, 715, 820), des connexions de protocole en provenance de dispositifs portatifs (105, 120, 135, 205, 220, 235) correspondants, permettant ainsi le transfert de la notification de données et des données disponibles vers les dispositifs portatifs (105, 120, 135, 205, 220, 235) ; et
la fourniture, par le serveur de continuation (150, 250, 615, 715, 820), d'une accessibilité au moteur d'orchestration de données (165, 830), permettant ainsi la réception de notifications de données.

10. Système informatique destiné à transférer des données à partir d'un serveur de continuation (150, 250, 615, 715, 820) vers un ou plusieurs dispositifs portatifs (105, 120, 135, 205, 220, 235), comprenant :
un ou plusieurs processeurs pouvant fonctionner pour lire et exécuter des instructions enregistrées dans un ou plusieurs éléments de mémoire ; et
le ou les éléments de mémoire enregistrant des instructions pour :
l'envoi, par un agent d'interrogation (215, 230, 245, 610, 710), d'une ou de plusieurs requêtes de connexion de protocole en provenance des dispositifs portatifs (105, 120, 135, 205, 220, 235) vers le serveur de continuation (150, 250, 615, 715, 820), dans lequel le lancement des connexions de protocole exige que le serveur de continuation (150, 250, 615, 715, 820) enregistre, dans une mémoire du serveur de continuation (150, 250, 615, 715, 820), des adresses de Protocole Internet (IP) des dispositifs portatifs (105, 120, 135, 205, 220, 235) correspondants ;
la création, par le ou les processeurs, d'un conteneur de piles (155, 255, 305) sur le serveur de continuation (150, 250, 615, 715, 820) pour enregistrer un état de chaque connexion de protocole,
l'indication de la disponibilité des connexions de protocole entre les dispositifs portatifs (105, 120, 135, 205, 220, 235) correspondants et le serveur de continuation (150, 250, 615, 715, 820),
dans lequel les états des connexions de protocole incluent un état CONNECTE et un état DECONNECTE,
dans lequel l'état CONNECTE indique que la connexion de protocole est établie, et l'état DECONNECTE indique que la connexion de protocole est suspendue ;
l'établissement, par le serveur de continuation (150, 250, 615, 715, 820), d'une connexion de protocole entre le ou les dispositifs portatifs (105, 120, 135, 205, 220, 235) et le serveur de continuation (150, 250, 615, 715, 820) ;
le maintien, par le serveur de continuation (150, 250, 615, 715, 820), de la connectivité avec le ou les dispositifs portatifs (105, 120, 135, 205, 220, 235) et la demande adressée au conteneur de piles (155, 255, 305) de récupérer l'état de chaque connexion de protocole sur la base d'une notification de données reçue, le maintien comprenant :
la suspension, par le serveur de continuation (150, 250, 615, 715, 820), de la connexion de protocole entre le serveur de continuation (150, 250, 615, 715, 820) et l'un des dispositifs portatifs (105, 120, 135, 205, 220, 235) après une période d'inactivité prédéfinie ;
si la connexion de protocole entre le serveur de continuation (150, 250, 615, 715, 820) et l'un des dispositifs portatifs (105, 120, 135, 205, 220, 235) est suspendue, l'envoi (525, 735) par le serveur de continuation (150, 250, 615, 715, 820) d'une alerte de suspension à l'agent d'interrogation (215, 230, 245, 610, 710) du dispositif portatif avec la connexion de protocole suspendue ;
sur la base de l'alerte de suspension reçue au niveau de l'agent d'interrogation (215, 230, 245, 610, 710) du dispositif portatif avec la connexion de protocole suspendue, le rétablissement (530, 740), par l'agent d'interrogation (215, 230, 245, 610, 710) du dispositif portatif, de la connexion de protocole suspendue par l'envoi d'une requête de connexion de protocole au serveur de continuation (150, 250, 615, 715, 820) à partir du dispositif portatif avec la connexion de protocole suspendue ; et
la réception, par un module de synchronisation de données, de la notification de données et des données disponibles transférées à partir du serveur de continuation (150, 250, 615, 715, 820) vers les dispositifs portatifs (105, 120, 135, 205, 220, 235) quand les états des connexions de protocole indiquent que les connexions de protocole ne sont pas suspendues.

11. Système informatique selon la revendication 10, comprenant également :
un moteur d'orchestration de données (165, 830) destiné à identifier une ou plusieurs notifications de données disponibles pour les dispositifs portatifs (105, 120, 135, 205, 220, 235) sur une entreprise commerciale, et à envoyer les notifications de données à partir de l'entreprise commerciale vers le serveur de continuation (150, 250, 615, 715, 820) ; et
un module de transmission sortante, en communication avec le moteur d'orchestration de données (165, 830), destiné à accepter une inscription des dispositifs portatifs (105, 120, 135, 205, 220, 235) en vue de la réception des notifications de données, et à envoyer les notifications de données vers les dispositifs portatifs (105, 120, 135, 205, 220, 235) qui sont inscrits au support de transmission sortante.

12. Système informatique selon la revendication 10 ou 11, dans lequel le dispositif portatif comprend l'agent d'interrogation (215, 230, 245, 610, 710) et le module de synchronisation de données ;
dans lequel le serveur de continuation (150, 250, 615, 715, 820) est adapté pour enregistrer dans une base de données le conteneur de piles (155, 255, 305) créé, et
dans lequel le serveur de continuation (150, 250, 615, 715, 820) est adapté pour récupérer le conteneur de piles (155, 255, 305) à partir de la base de données sur la base de la notification de données reçue.

13. Produit de programme informatique comprenant des instructions lisibles par ordinateur qui, quand elles sont chargées et exécutées sur un système informatique, amènent le système informatique à effectuer des opérations conformément au procédé selon l'une quelconque des revendications 1 à 9.
